## Europäisches Patentamt
## European Patent Office
## Office européen des brevets

(19)

(11) Veröffentlichungsnummer: **0 141 989**
**B1**

(12) # EUROPÄISCHE PATENTSCHRIFT

(45) Veröffentlichungstag der Patentschrift:
**22.04.87**

(51) Int. Cl.⁴: **B 65 G 11/12**

(21) Anmeldenummer: **84111549.6**

(22) Anmeldetag: **27.09.84**

(54) **Aus rohrförmigen Rutschenschüssen gebildete Rutsche für den transport von Schüttgut.**

(30) Priorität: **04.11.83 DE 3339929**

(43) Veröffentlichungstag der Anmeldung:
**22.05.85 Patentblatt 85/21**

(45) Bekanntmachung des Hinweises auf die Patenterteilung:
**22.04.87 Patentblatt 87/17**

(84) Benannte Vertragsstaaten:
**AT BE CH DE FR GB IT LI LU NL SE**

(56) Entgegenhaltungen:
**DE - A - 2 919 781**
**FR - A - 1 559 852**
**US - A - 4 125 195**

(73) Patentinhaber: **Albert Böcker GmbH & Co. KG,**
**Waldstrasse 1, D-4712 Werne (DE)**

(72) Erfinder: **Böcker, Albert, Im Thünen 28, D-4712 Werne**
**(DE)**

ACTORUM AG

## Beschreibung

Die Erfindung betrifft eine aus rohrförmigen Rutschenschüssen gebildete Rutsche für den Transport von Schüttgut, insbesondere Schuttrutsche für den Hochbau, die einen an einem Rutschenturm gelagerten, im wesentlichen senkrecht verlaufenden oberen Rutschenabschnitt sowie einen gegenüber diesem in unterschiedlichen Winkelstellungen einstellbaren, ein Austragsende bildenden unteren Rutschenabschnitt aufweist, wobei zwischen dem oberen Rutschenabschnitt und dem Austragsabschnitt ein Drehkranz angeordnet ist, an dessen dem Austragsabschnitt zugeordneten Drehteil ein gegenüber dem Austragsabschnitt formschlüssig gleitendes Schwenksegment angeordnet ist.

Durch die US-PS 41 25 195 ist eine Vorrichtung bekanntgeworden, bei der eine Mehrzahl von Schuttrutschen unterhalb eines Behälters angeordnet sind, die trockenes kleinstückiges Gut auf Eisenbahnwaggons abgeben sollen.

Die einzelne Rutsche besteht hierbei aus einem oberen Abschnitt, an den sich unterseitig ein Drehkranz anschliesst, aus einem Mittelabschnitt und aus einem teleskopierbaren unteren Abschnitt. Die einzelnen Abschnitte sind gelenkig miteinander verbunden. Zwischen dem oberen Abschnitt, der sich unterseitig an den Drehkranz anschliesst, und dem Mittelabschnitt ist ein staubdichter Verschluss vorgesehen, der als ein an den oberen Abschnitt angeflanschtes Segment ausgebildet ist. Dieses Segment weist im Überlappungsbereich mit dem daran anschliessenden Mittelabschnitt eine gekrümmte Führungsfläche auf, die mit einer entsprechenden Führungsfläche am Mittelabschnitt korrespondiert. Zwischen beiden Führungsflächen ist zum Zwecke der Stababdichtung ein Wischer vorgesehen. Bei dieser bekannten Anordnung ist es erforderlich, die Flanschverbindung zwischen dem Segment und dem unterhalb des Drehkranzes angeordneten Rutschenabschnitt in einer Ebene anzuordnen, die etwa diagonal verlaufend durch die Mittellängsebene des oberen Rutschenabschnittes geht. Dadurch muss zwangsläufig die Schwenkachse des Mittelabschnittes relativ weit nach unten verlegt werden. Gleichzeitig ist es bei der bekannten Vorrichtung erforderlich, das obere Ende des Mittelabschnittes in dem mit dem Schwenksegment korrespondierenden Bereich der Krümmung dieses Schwenksegmentes anzupassen, um eine einwandfreie Abdichtung zu erzielen. Dies erfordert einen zusätzlichen Bauaufwand für das obere Ende des Mittelabschnittes. Da sich das bekannte Schwenksegment nicht selbsttätig der jeweiligen Position des Mittelabschnittes anpassen kann, ist die durch den Wischer gebildete zusätzliche Dichtung erforderlich.

Weiter ist aus der DE-A-29 19 781 eine Material- oder Schuttrutsche bekannt, mit deren Hilfe Schüttgut oder andere Materialien von grossen Höhen herabgelassen werden können. Die bekannte Schuttrutsche weist einen im wesentlichen senkrecht stehenden teleskopierbaren Abschnitt auf, der in seinem unteren Bereich über ein bewegliches Auflager am Rutschenturm gelagert ist. Der Austragsabschnitt der vorbekannten Schuttrutsche wird durch ein Gelenkstück gebildet, welches mit Bezug auf die Länge des Austragsabschnittes zwei orthogonal versetzt zueinander angeordnete Schwenklager aufweist derart, dass der Austragsschnitt in drei Richtungen, nämlich nach links und rechts horizontal sowie nach oben verschwenkbar ist. Zu diesem Zweck unterteilt sich der Austragsabschnitt in ein oberes Gelenkstück und ein unteres Gelenkstück. Mit der vorgenannten Schwenkeinrichtung ist zwar die gewünschte Beweglichkeit erreichbar; sie baut jedoch ausserordentlich lang, weil die beiden senkrecht zueinanderstehenden Achsen relativ weit voneinander entfernt sein müssen. Dies hat den Nachteil, dass ein sehr starkes Abschwenken des Gelenkstückes erforderlich ist, wenn entsprechend hochbauende Lastfahrzeuge mit Schüttgut beladen werden sollen. Dies erfordert eine starke Überlappung im Schwenkbereich des oberen Gelenkstückes sowie ausreichend Platz im Austragsbereich des Austragsabschnittes. Dieser Platz ist jedoch in aller Regel nicht vorhanden.

Aufgabe der Erfindung ist es, bei einer Rutsche der eingangs genannten Gattung die Situation im Austragsabschnitt so zu verbessern, dass bei relativ kurzbauendem Austragsabschnitt grösstmögliche Höhen der Austragsöffnung über dem Boden erreicht werden, wobei gleichzeitig eine einwandfreie Abdichtung im Umlenkbereich vom im wesentlichen senkrecht verlaufenden oberen Rutschenabschnitt zum Austragsabschnitt gewährleistet sein soll. Die Dichtung soll möglichst verschleissfrei sein und sich der jeweiligen Stellung des unteren Rutschenabschnittes anpassen. Es soll weiter erreicht werden, dass auch hochbauende Lastfahrzeuge relativ nahe an den Rutschenturm heranfahren und einwandfrei beladen werden können.

Die Erfindung löst die gestellte Aufgabe bei einer Rutsche der eingangs genannten Gattung durch die Merkmale des kennzeichnenden Teils des Anspruches 1. Durch die Zuordnung des Schwenksegmentes in Verbindung mit der Lage der Schwenkachsen ist es möglich, die Schwenkachse des Austragsabschnittes bis unmittelbar in den Bereich des Drehkranzes zu verlegen, d.h. der Schwenkpunkt des Austragsabschnittes kann weiter nach oben verlegt werden, so dass hierdurch bereits eine höhere Position der Austragsöffnung über dem Boden bei gleichem Schwenkwinkel erreicht wird, wobei durch die unmittelbare Anbindung des Austragsabschnittes an den Drehteil des Drehkranzes die Austragshöhe ebenfalls verbessert wird. Das Schwenksegment legt sich mit seiner unteren Kante am Boden des Austragsabschnittes an und passt sich somit den unterschiedlichen Schwenkpositionen ständig an, so dass irgendwelche Spaltbildungen im Übergangsbereich und damit eine Beeinträchtigung der Umwelt durch Staub oder dgl. vermieden werden. Eine bauliche Anpassung des unteren Rutschenabschnittes an das Schwenksegment ist nicht erforderlich.

Weitere Merkmale der Erfindung sind durch die Unteransprüche gekennzeichnet. Die Führungskonsolen gemäss Anspruch 2 haben die Aufgabe, das Schwenksegment auch dann noch sicher im Austragsabschnitt zu führen, wenn der zulässige Winkel überschritten ist, so dass sich zwischen Schwenksegment und Austragsabschnitt ein kleiner Spalt ergibt, durch den das Feingut bereits herausfallen kann. Dem Bedienungsmann wird hiermit auf einfachste Weise verdeutlicht, dass er den zulässigen Schwenkwinkel überschritten hat. Die Erfindung wird jedoch nicht verlassen, wenn entsprechende Endbegrenzungen, Anschläge oder dgl. zwischen Schwenksegment und Austragsabschnitt vorgesehen sind, die ein Überschreiten des zulässigen Schwenkwinkels verhindern bzw. anzeigen.

Die Rückwand nach Anspruch 3 ist so lang ausgebildet, dass ausreichende Austragshöhen erreichbar sind, während der Distanzhalter nach Anspruch 4 der gleitenden Führung des Schwenksegmentes in dem Austragsabschnitt dient.

Anspruch 5 kennzeichnet die Anordnung des Schwenklagers an der Rückwand des Schwenksegmentes.

Das dem Austragsabschnitt zugeordnete Drehteil des Drehkranzes weist gemäss Anspruch 6 und 7 in das Schwenksegment einfassende Leitflächen auf; diese Leitflächen sind etwa trapezförmig ausgebildet, so dass sie mit den entsprechend verlaufenden Flächen bzw. Kanten des Schwenksegmentes korrespondieren und gewährleisten, dass bei Schwenkbewegungen des Schwenksegmentes um die Achse des Schwenksegmentes der Übergang zwischen dem Drehteil des Drehkranzes und dem Schwenksegment einwandfrei verschlossen wird.

Vorteilhafte Ausgestaltungen des Drehkranzes sind durch die Ansprüche 8-12 gekennzeichnet, wobei gemäss Anspruch 12 die Drehteile des Drehkranzes an ihren einander zugewandten Enden einen kreisrunden Querschnitt und an ihren dem oberen Rutschenabschnitt bzw. dem Schwenksegment zugeordneten Ende einen rechteckigen oder quadratischen Querschnitt aufweisen, da bevorzugt im Querschnitt rechteckige rohrförmige Rutschen Verwendung finden.

Um den Austragsabschnitt in unterschiedlichen Stellungen gegenüber dem im wesentlichen senkrecht verlaufenden oberen Rutschenabschnitt einstellen zu können, sind beide Teile über entsprechende Stellmittel wie Seilzüge, Hydraulikzylinder oder dgl. miteinander verbunden. Zur Festlegung der einmal eingestellten «Gebrauchsstellung» empfiehlt es sich, gemäss Anspruch 13 zwischen dem Austragsabschnitt und dem Rutschenturm in an sich bekannter Weise eine den Austragsabschnitt in der eingestellten Winkellage festlegende Stütze vorzusehen.

Die Erfindung wird nachfolgend anhand eines Ausführungsbeispiels näher erläutert.

Es zeigen:

Fig. 1 in perspektivischer Gesamtansicht eine Schuttrutsche mit Rutschenturm und Austragsabschnitt

Fig. 2 den Übergangsbereich vom oberen Rutschenabschnitt zum Austragsabschnitt in einer Seitenansicht

Fig. 3 eine Draufsicht auf einen Abschnitt der Rollenführungsbahn gemäss Ansicht III-III nach Fig. 2

Fig. 4 die Ansicht gemäss IV nach Fig. 2

Fig. 5 einen Längsschnitt durch den Übergangsbereich vom oberen Rutschenabschnitt zum Austragsabschnitt

Fig. 6-9 Drehkranz, Schwenksegment und Austragsabschnitt in einer Explosionszeichnung

Fig. 10 eine Draufsicht in Pfeilrichtung X gemäss Fig. 9.

In der folgenden Figurenbeschreibung wurden — soweit erforderlich — gleiche Teile mit gleichen Bezugszahlen belegt.

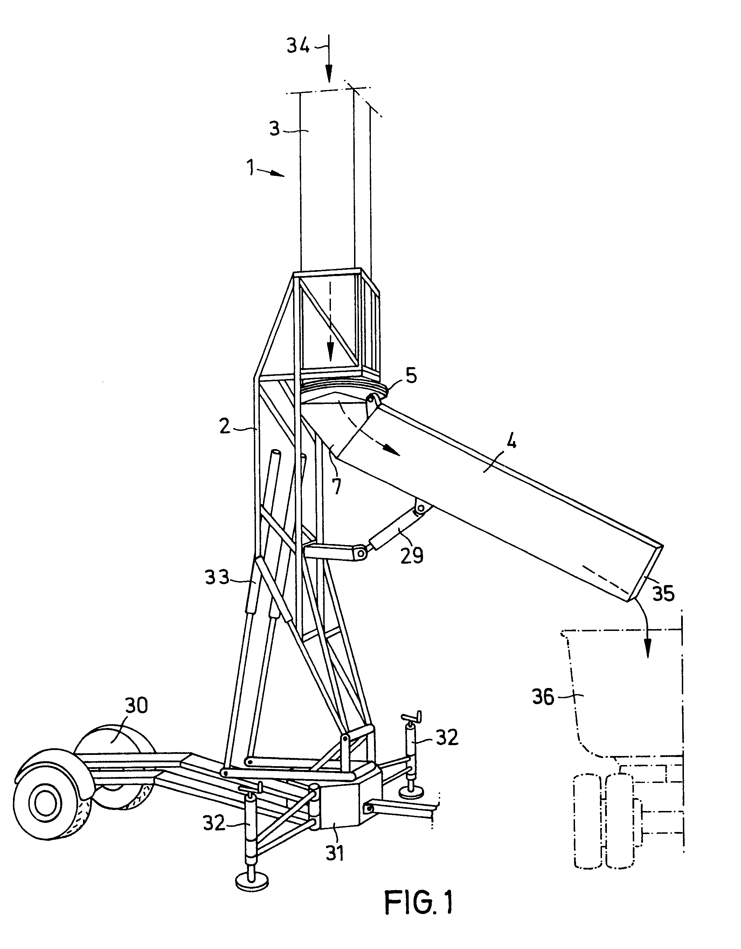

Die in der Fig. 1 dargestellte Schuttrutsche ist mit 1 bezeichnet. Sie besteht im wesentlichen aus einem auf einem Fahrwerk 30 verlagerten Rutschenturm 2, der in seinem oberen Bereich den senkrechten oder im wesentlichen senkrecht angeordneten oberen Rutschenabschnitt 3 trägt. Dieser Rutschenabschnitt 3 besteht aus mehreren, teleskopartig ineinander verschachtelten Rutschenschüssen. Der Rutschenturm 2 ist vorteilhaft über einen nicht näher dargestellten, bei 31 angeordneten Drehkranz am Fahrgestell 30 verlagert. Seitlich ausstellbare bzw. ausschwenkbare Spindelstützen 32 geben der Schuttrutsche die ausreichende Standfestigkeit. Über mit 33 bezeichnete hydraulische Zylinder, die auch durch Spindeln, Hubwinden oder dgl. ersetzt werden können, ist der Rutschenturm 2 in seiner Neigung verstellbar.

Im unteren Bereich des oberen Rutschenabschnittes 3 ist ein Drehkranz 5 angeordnet, um den der Austragsabschnitt 4 schwenkbar ist. Zwischen dem Austragsabschnitt 4 und dem Drehkranz 5 ist ein Schwenksegment 7 vorgesehen, das den beim Abschwenken des Austragsendes 4 entstehenden Spalt in jeder Schwenkstellung schliesst. Das in Pfeilrichtung 34 transportierte Schüttgut wird so über die Austragsöffnung 35, die durch eine nicht dargestellte Bremsklappe teilweise verschlossen sein kann, in das andeutungsweise dargestellte Fahrzeug 36 verladen.

Mit 29 ist eine Stütze bezeichnet, über die der Austragsabschnitt 4 in seiner Gebrauchsstellung am Rutschenturm 2 abgestützt ist. Die Länge dieser Stütze 29 ist veränderbar.

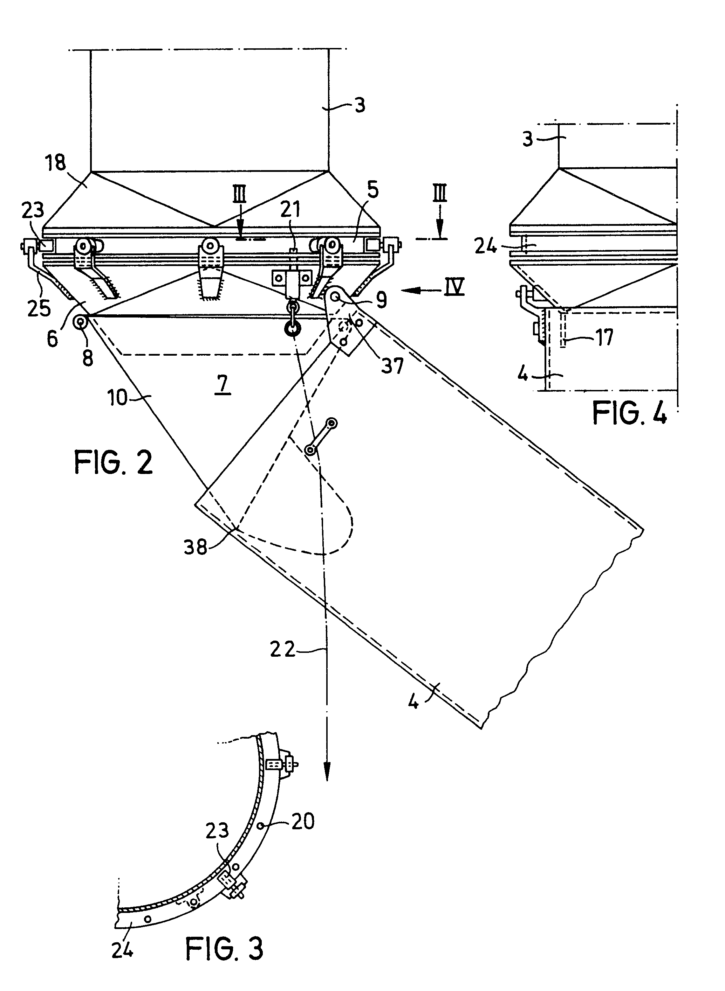

Aus den Fig. 2-10 ist ersichtlich, dass an den oberen Rutschenabschnitt 3 ein Drehteil 18 eines Drehkranzes 5 angeschlossen ist. Das Drehteil 18 ist dabei so ausgebildet, dass ein einwandfreier Übergang von dem dem oberen Rutschenabschnitt zugeordneten Ende 27 zu den einander zugewandten Enden der Drehteile 6 und 18 erfolgt. Gleiches gilt für das untere Drehteil 6 mit Bezug auf den Übergang zum Schwenksegment 7; auch hier ist das dem Schwenksegment 7 zugeordnete Ende des Drehteiles 6 (mit 28 bezeichnet) dem Querschnitt des anschliessenden Schwenksegmentes 7 angepasst.

Wie insbesondere aus der Fig. 2 erkennbar, sind an dem dem Austragsabschnitt 4 zugeordneten Drehteil 6 des Drehkranzes 5 Rollenhalterungen 25 mit Rollen 29 angeordnet, die in entsprechende Rollenführungen 24 eingreifen, so dass die beiden Drehteile 6 und 18 gegeneinander verdrehbar sind. Mittels eines Arretierungsbolzens 21, welcher über einen Seilzug 22 betätigbar ist, und der in entsprechende Ausnehmungen 20 der Führungsflansche 19 der Rollenführung 24 eingreift, sind — in Umfangsrichtung gesehen — die beiden Drehteile 6 und 18 in unterschiedlichen Stellungen zueinander festlegbar. Der Arretierungsbolzen 21 ist federbelastet und rastet bei Entlastung des Seilzuges 22 selbsttätig ein.

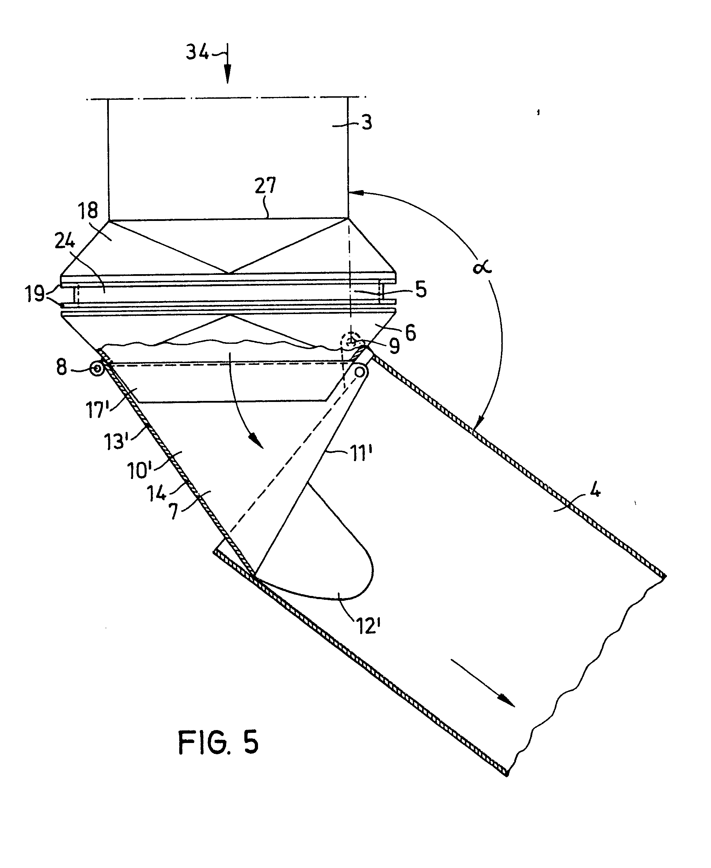

An dem Drehteil 6 ist im Scheitelpunkt des durch den oberen Rutschenabschnitt 3 und den Austragsabschnitt 4 gebildeten Winkels α (s. Fig. 5) mittels Scharnierlappen 37 (Fig. 2) der Austragsabschnitt 4 schwenkbar angeschlossen. Der Anschluss der Scharnierlappen 37 unmittelbar am Drehteil 6 des Drehkranzes 5 ermöglicht es, die Austragsöffnung 35 relativ hoch zu verlagern.

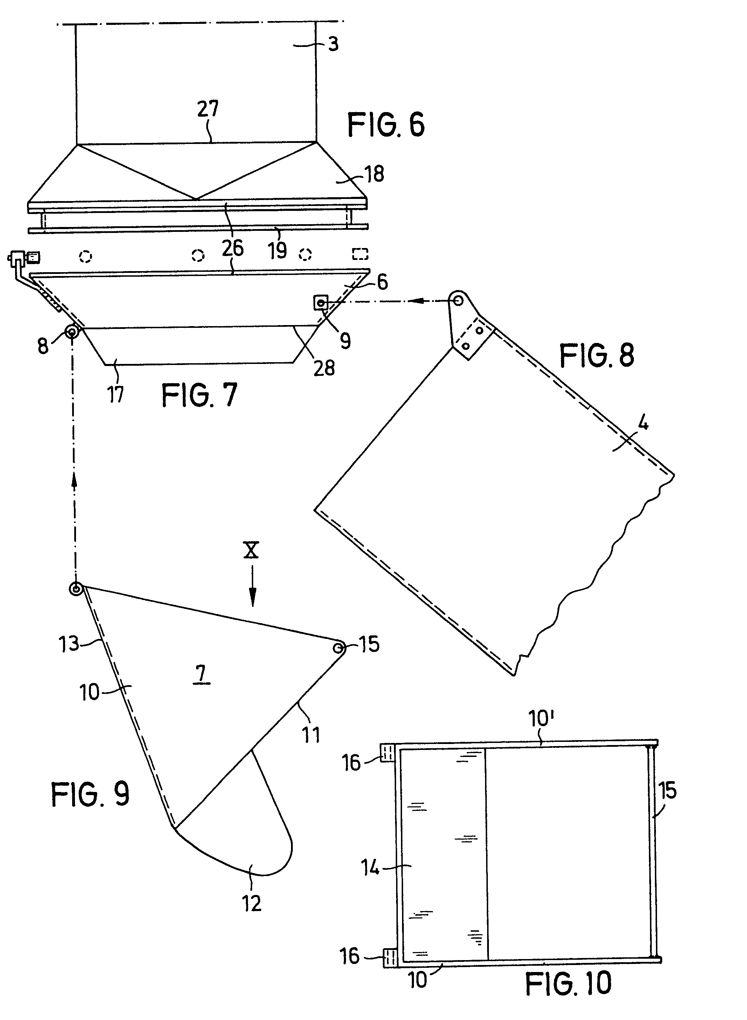

Der durch diese Anlenkung des Austragsabschnittes 4 entstehende Spalt wird durch ein Schwenksegment 7 verschlossen. Das Schwenksegment 7 ist mit Schwenklagern 16 (Fig. 10) versehen, die an einer Schwenkachse 8 verlagert sind, welche ihrerseits am Drehteil 6 angeordnet ist. Die Schwenkachsen 8 und 9 liegen ersichtlich in etwa auf gleicher Höhe. Aus Gründen der einwandfreien Abdichtung sind am unteren Ende des Drehteiles 6 zwei etwa trapezförmige Leitflächen 17 und 17' vorgesehen, die in das Schwenksegment 7 eingreifen.

Das Schwenksegment 7 besitzt zwei Seitenwände 10, 10', die an ihren freien Stirnkanten 11, 11' in ihrem unteren Bereich Konsolen 12, 12' aufweisen, die die Seitenwände verlängern und bei extremer Abknickung des Austragsabschnittes 4 das Schwenksegment nach wie vor in dem Austragsabschnitt führen. Beide Seitenwände 10, 10' sind durch eine Rückwand 14 miteinander verbunden. Auf der der Rückwand 14 gegenüberliegenden Seite (s. Fig. 9) ist ein durch ein Rundeisen gebildeter Distanzhalter 15 vorgesehen, der zum einen die Seitenwände 10, 10' distanziert und zum anderen das Schwenksegment im oberen Bereich im Austragsabschnitt 4 führt.

Es ist erkennbar, dass das lediglich frei um die Schwenkachse 8 pendelnd aufgehängte Schwenksegment 7 bei jeder Winkelstellung des Austragsabschnittes 4 mit seiner Kante 38 am Boden des Austragsabschnittes 4 anliegen und so das Schüttgut zuverlässig und ohne Umweltbelastung in den Austragsabschnitt 4 überleiten wird.

*Bezugszeichenliste*

| | | |
|---|---|---|
| 1 | = | Schuttrutsche |
| 2 | = | Rutschenturm |
| 3 | = | oberer Rutschenabschnitt |
| 4 | = | Austragsabschnitt |
| 5 | = | Drehkranz |
| 6 | = | dem Austragsabschnitt 4 zugeordnetes Drehteil |
| 7 | = | Schwenksegment |
| 8 | = | Schwenkachse des Schwenksegmentes 7 |
| 9 | = | Schwenkachse des Austragsabschnittes 4 |
| 10, 10' | = | Seitenwände des Schwenksegmentes 7 |
| 11, 11' | = | freie Stirnkanten der Seitenwände 10, 10' |
| 12' 12' | = | Konsolen |
| 13, 13' | = | parallel verlaufende Schenkel der Seitenwände 10, 10' |
| 14 | = | Rückwand |
| 15 | = | Distanzhalter |
| 16 | = | Schwenklager für Schwenksegment 14 |
| 17' 17' | = | Leitflächen |
| 18 | = | dem oberen Rutschenabschnitt zugeordnetes Drehteil |
| 19 | = | Führungsflanschen der Drehteile 6, 18 |
| 20 | = | Ausnehmungen für Arretierungsbolzen 21 |
| 21 | = | Arretierungsbolzen |
| 22 | = | Seilzug |
| 23 | = | Rollen |
| 24 | = | Rollenführung |
| 25 | = | Rollenhalterungen |
| 26 | = | einander zugewandte Enden der Drehteile 6, 18 |
| 27 | = | dem oberen Rutschenabschnitt zugeordnetes Ende des Drehteiles 18 |
| 28 | = | dem Schwenksegment 7 zugeordnetes Ende des Drehteiles 6 |
| 29 | = | Stütze |
| 30 | = | Fahrwerk |
| 31 | = | Drehkranz |
| 32 | = | Spindelstütze |
| 33 | = | hydraulische Zylinder |
| 34 | = | Pfeilrichtung |
| 35 | = | Austragsöffnung |
| 36 | = | Fahrzeug |
| 37 | = | Scharnierlappen |
| 38 | = | Kante des Schwenksegmentes 7 |
| α | = | Winkel |

**Patentansprüche**

1. Aus rohrförmigen Rutschenschüssen gebildete Rutsche für den Transport von Schüttgut, insbesondere Schuttrutsche (1) für den Hochbau, die einen an einem Rutschenturm (2) gelagerten, im wesentlichen senkrecht verlaufenden oberen Rutschenabschnitt (3) sowie einen gegenüber diesem in unterschiedlichen Winkelstellungen einstellbaren, ein Austragsende bildenden unteren Austragsabschnitt (4) aufweist, wobei zwischen dem oberen Rutschenabschnitt (3) und dem Austragsabschnitt (4) ein Drehkranz (5) angeordnet ist, an dessen dem Austragsabschnitt (4) zugeordneten Drehteil (6) ein gegenüber dem Austragsabschnitt (4) formschlüssig gleitendes Schwenksegment (7) angeordnet ist, dadurch gekennzeichnet, dass sowohl das Schwenksegment (7) als auch der Austragsabschnitt (4) gelenkig [Schwenkachsen (8, 9)] an dem den Austragsabschnitt zugeordneten Drehteil (6) des Drehkranzes (5) gelagert sind und die Schwenkachsen (8, 9) gegenüberliegend und parallel zueinander angeordnet sind, derart, dass die Schwenkachse (9) des Austragsabschnittes (4) im Scheitelpunkt des durch den oberen Rutschenabschnitt (3) und den Austragsabschnitt (4) gebildeten Winkels (α) und die Schwenkachse (8) des Schwenksegmentes (7) an der Aussenseite des dem Austragsabschnitt (4) zugeordneten Drehteils (6) des Drehkranzes (5) angeordnet ist.

2. Rutsche nach Anspruch 1, dadurch gekennzeichnet, dass das Schwenksegment (7) etwa dreieckförmige Seitenwände (10, 10') aufweist, deren in den Austragsabschnitt (4) einfassende freie Stirnkanten (11, 11') im unteren Bereich durch Führungskonsolen (12, 12') verlängert sind.

3. Rutsche nach einem der Ansprüche 1 oder 2, dadurch gekennzeichnet, dass das Schwenksegment (7) aus zwei parallel zueinander verlaufen-den, im wesentlichen dreieckförmigen Seitenwän-den (10, 10') besteht, wobei zwei parallel verlaufende Schenkel (13, 13') der Seitenwände durch eine gemeinsame, eine Leitfläche für das Schüttgut bildende Rückwand (14) miteinander verbunden sind.

4. Rutsche nach einem der Ansprüche 1-3, dadurch gekennzeichnet, dass die beiden parallel zueinander verlaufenden dreieckförmigen Seitenwände (10, 10') des Schwenksegmentes (7) an der der Rückwand (14) gegenüberliegenden Seite durch einen Distanzhalter (15) miteinander verbunden sind.

5. Rutsche nach einem der Ansprüche 1-4, dadurch gekennzeichnet, dass die Rückwand (14) des Schwenksegmentes (7) das oder die Schwenklager (16) für die Schwenkachse (8) trägt oder bildet.

6. Rutsche nach einem der Ansprüche 1-5, dadurch gekennzeichnet, dass das dem Austragsabschnitt (4) zugeordnete Drehteil (6) des Drehkranzes (5) in das Schwenksegment (7) einfassende Leitflächen (17, 17') aufweist.

7. Rutsche nach einem der Ansprüche 1-6, dadurch gekennzeichnet, dass die Leitflächen (17, 17') etwa trapezförmig ausgebildet sind.

8. Rutsche nach einem der Ansprüche 1-7, dadurch gekennzeichnet, dass das dem Austragsabschnitt (4) zugeordnete Drehteil (6) des Drehkranzes (5) in Umfangsrichtung in mehreren Stellungen gegenüber dem dem oberen Rutschenabschnitt (3) zugeordneten Drehteil (18) festlegbar ist.

9. Rutsche nach einem der Ansprüche 1-8, dadurch gekennzeichnet, dass beide Drehteile (6, 18) des Drehkranzes (5) in ihren Führungsflanschen (19) korrespondierende Ausnehmungen (20) für den Durchgriff eines Arretierungsbolzens (21) aufweisen.

10. Rutsche nach einem der Ansprüche 1-9, dadurch gekennzeichnet, dass der Arretierungsbolzen (21) an dem dem Austragsabschnitt (4) zugeordneten Drehteil (6) des Drehkranzes (5) verlagert und über einen Seilzug (22) oder dgl. betätigbar ist.

11. Rutsche nach einem der Ansprüche 1-10, dadurch gekennzeichnet, dass die beiden Drehteile (6, 18) des Drehkranzes (5) über Rollen (23) mit zugehöriger Rollenführung (24) aneinander geführt und die Rollenhalterungen (25) an dem dem Austragsabschnitt (4) zugeordneten Drehteil (6) angeordnet sind.

12. Rutsche nach einem der Ansprüche 1-11, dadurch gekennzeichnet, dass die Drehteile (6, 18) des Drehkranzes (5) an ihren einander zugewandten Enden (26) einen kreisrunden Querschnitt und an ihrem dem oberen Rutschenabschnitt (3) bzw. dem Schwenksegment (7) zugeordneten Ende (27, 28) einen rechteckigen oder quadratischen Querschnitt aufweisen.

13. Rutsche nach einem der Ansprüche 1-12, dadurch gekennzeichnetm dass — wie an sich bekannt — zwischen dem Austragsabschnitt (4) und dem Rutschenturm (2) eine den Austragsabschnitt in der eingestellten Winkellage festlegende Stütze (29) vorgesehen ist.

## Claims

1. Chute formed of tubular chute lengths, for the transporting of bulk material, especially a waste chute (1) for building work, which has a substantially vertically arranged upper chute portion (3) mounted on a chute tower (2), and also a lower discharge portion (4) which is adjustable relatively to said upper portion in various angular situations and forms a discharge end, there being arranged between the upper chute portion (3) and the discharge portion (4) a rotary ring mount (5) on whose rotary part (6) associated with the discharge portion (4) there is arranged a swivel segment (7) slidable in a shape-fitting situation relatively to the discharge portion (4), characterised in that both the swivel segment (7) and also the discharge portion (4) are mounted pivotably (swivel shafts 8, 9) on that rotary part (6) of the rotary ring mount (5) which is associated with the discharge portion, and the swivel shafts (8, 9) are arranged opposite and parallel to one another in such a manner that the swivel shaft (9) of the discharge portion (4) is arranged at the apex point of the angle (α) formed by the upper chute portion (3) and the discharge portion (4), and the swivel shaft (8) of the swivel segment (7) is arranged at the outside of that rotary part (6) of the rotary ring mount (5) which is associated with the discharge portion (4).

2. Chute according to claim 1, characterised in that the swivel segment (7) has substantially triangular side walls (10, 10') whose free end edges (11, 11'), extending into the discharge portion (4), are prolonged in the lower region by guide brackets (12, 12').

3. Chute according to one of claims 1 or 2, characterised in that the swivel segment (7) comprises two side walls (10, 10') which extend parallel to one another and are substantially triangular in shape, two parallel legs (13, 13') of the side walls being connected to one another by a common rear wall (14) which forms a guide surface for the bulk material.

4. Chute according to one of claims 1-3, characterised in that the two triangular side walls (10, 10') of the swivel segment (7) which extend parallel to one another are connected to one another at the side opposite to the rear wall (14) by a spacer element (15).

5. Chute according to one of claims 1-4, characterised in that the rear wall (14) of the swivel segment (7) supports or forms the swivel bearing or bearings (16) for the swivel shaft (8).

6. Chute according to one of claims 1-5, characterised in that that rotary part (6) of the rotary ring mount (5) which is associated with the discharge portion (4) has guide surfaces (17, 17') which extend into the swivel segment (7).

7. Chute according to one of claims 1-6, characterised in that the guide surfaces (17, 17') are of substantially trapezoidal construction.

8. Chute according to one of claims 1-7, characterised in that that rotary part (6) of the rotary ring mount (5) which is associated with the discharge portion (4) is adapted to be fixed in the circumferential direction in various positions relatively to the rotary part (18) associated with the upper chute portion (3).

9. Chute according to one of claims 1-8, characterised in that the two rotary parts (6, 18) of the rotary ring mount (5) have in their guide flanges (19) corresponding holes (20) for a securing pin (21) to extend through.

10. Chute according to one of claims 1-9, characterised in that the securing pin (21) is mounted on the rotary part (6) of the rotary ring mount (5) associated with the discharge portion (4) and is operable by means of a rope system (22) or the like.

11. Chute according to one of claims 1-10, characterised in that the two rotary parts (6, 18) of the rotary ring mount (5) are guided on one another by means of rollers (23) with an associated roller guide (24), and the roller supports (25) are arranged on the rotary part (6) which is associated with the discharge portion (4).

12. Chute according to one of claims 1-11, characterised in that the rotary parts (6, 18) of the rotary ring mount (5) have a circular cross-section at their ends (26) which face one another and a square or rectangular cross-section at their ends (27, 28) associated with the upper chute portion (3) and with the swivel segment (7) respectively.

13. Chute according to one of claims 1-12, characterised in that — as is known per se — there is provided between the discharge portion (4) and the chute tower (2) a prop (29) which secures the discharge portion in the angular position to which it has been adjusted.


**Revendications**

1. Glissière constituée par des éléments tubulaires pour le transport de matériau en vrac, en particulier glissière de déversement (1) pour le bâtiment, qui comporte une section supérieure (3) s'étendant sensiblement verticalement placée sur une tourelle de glissière (2), ainsi qu'une section de décharge inférieure (4) pouvant être réglée par rapport à la première dans différentes positions angulaires, constituant une extrémité de décharge, une couronne de pivotement (5) étant placée entre la section supérieure (3) et la section de décharge (4) et une section pivotante (7) glissant avec concordance de forme par rapport à la section de décharge (4) étant placée sur sa partie rotative (6) rattachée à la section de décharge (4), caractérisée en ce que la section pivotante (7) et la section de déversement (4) sont articulées [axes de pivotement (8, 9)] à la partie rotative (6) de la couronne de pivotement (5) correspondant à la section de décharge et en ce que les axes de pivotement (8, 9) sont opposés et parallèles entre eux, de telle façon que l'axe de pivotement (9) de la section de décharge (4) est placé au sommet de l'angle (α) formé par la section supérieure (3) et la section de décharge (4) et l'axe de pivotement (8) de la section pivotante (7) est placé sur la face extérieure de la partie rotative (6) de la couronne de pivotement (5) correspondant à la section de décharge (4).

2. Glissière selon la revendication 1, caractérisée en ce que la section pivotante (7) comporte des parois latérales (10, 10') sensiblement triangulaires, dont les côtés frontaux libres (11, 11') pénétrant dans la section de décharge (4) sont prolongés dans la zone inférieure par des consoles de guidage (12, 12').

3. Glissière selon la revendication 1 ou 2, caractérisée en ce que la section pivotante (7) comprend deux parois latérales (10, 10') sensiblement triangulaires, parallèles entre elles, deux branches (13, 13') parallèles des parois latérales étant reliées entre elles par une paroi postérieure commune (14), constituant une surface de guidage pour le matériau en vrac.

4. Glissière selon l'une des revendications 1 à 3, caractérisée en ce que les deux parois latérales triangulaires (10, 10') parallèles de la section pivotante (7) sont reliées entre elles du côté opposé à la paroi postérieure (14) par une entretoise (15).

5. Glissière selon l'une des revendications 1 à 4, caractérisée en ce que la paroi postérieure (14) de la section pivotante (7) supporte ou constitue le ou les paliers de pivotement (16) pour l'axe de pivotement (8).

6. Glissière selon l'une des revendications 1 à 5, caractérisée en ce que la partie rotative (6) de la couronne de rotation (5) correspondant à la section de décharge (4) comporte des surfaces de guidage (17, 17') pénétrant dans la section pivotante (7).

7. Glissière selon l'une des revendications 1 à 6, caractérisée en ce que les surfaces de guidage (17, 17') ont une forme sensiblement trapézoïdale.

8. Glissière selon l'une des revendications 1 à 7, caractérisée en ce que la partie rotative (6) de la couronne de rotation (5) correspondant à la section de décharge (4) peut être fixée en direction périphérique en plusieurs positions par rapport à la partie rotative (18) correspondant à la section de glissière supérieure (3).

9. Glissière selon l'une des revendications 1 à 8, caractérisée en ce que les deux parties rotatives (6, 18) de la couronne de rotation (5) comportent des trous (20) correspondants dans leurs brides de guidage (19) pour le passage d'une cheville de blocage (21).

10. Glissière selon l'une des revendications 1 à 9, caractérisée en ce que la cheville de blocage (21) est décalée sur la partie rotative (6) de la couronne de rotation (5) correspondant à la section de décharge (4) et peut être actionnée au moyen d'une commande à câble (22) ou analogue.

11. Glissière selon l'une des revendications 1 à 10, caractérisée en ce que les deux parties rotatives (6, 18) de la couronne de rotation (5) sont guidées l'une au contact de l'autre au moyen de galets (23) avec un guidage de galets (24) correspondant, et en ce que les supports de galets (25) sont placés sur la partie rotative (6) correspondant à la section de décharge (4).

12. Glissière selon l'une des revendications 1 à 11, caractérisée en ce que les parties rotatives (6, 18) de la couronne de rotation (5) présentent à leurs extrémités (26) en regard une section droite circulaire et à leur extrémité (27, 28) correspondant à la section de glissière (3) ou à la section pivotante (7), une section droite rectangulaire ou carrée.

13. Glissière selon l'une des revendications 1 à 12, caractérisée en ce que (comme il est connu en soi) il est prévu entre la section de décharge (4) et la tourelle de glissière (2) un appui (29) immobilisant la section de décharge (4) dans la position angulaire réglée.

FIG.1

FIG. 2

FIG. 3

FIG. 4

FIG. 5

FIG. 6

FIG. 7

FIG. 8

FIG. 9

FIG. 10